# EUROPÄISCHE PATENTANMELDUNG

(11) **EP 1 068 948 A2**
(43) Veröffentlichungstag der Anmeldung: **17.01.2001**
(21) Anmeldenummer: 00114209.0
(22) Anmeldetag: 03.07.2000
(51) Int. Cl.: B32B 7/00, F02M 37/22, B60K 15/04

(54) **Elektrisch leitfähige Kunststofformteile**

(30) Priorität: 14.07.1999 DE 19932383
(71) Anmelder: Ticona GmbH, 65451 Kelsterbach (DE)
(72) Erfinder: Reil, Frank, 64342 Seeheim (DE); Forschler, Bernhard, 64285 Darmstadt (DE)

(57) **Zusammenfassung**

Formteil, insbesondere Kraftstoffilter oder Tankeinfüllstutzeneinsatz mit einem Korpus aus elektrisch nicht leitendem Kunststoff dessen Oberfläche ganz oder teilweise, vorzugsweise mit streifenförmiger, linien-, gitter- oder netzartiger Struktur aus einem elektrisch leitfähigen Material, vorzugsweise einer elektrisch leitfähigen Polyacetalzusammensetzung beschichtet ist, wobei unterschiedliche Bereiche dieser Struktur wahlweise untereinander elektrisch leitend miteinander verbunden sind. Dieses Formteil wird vorteilhaft nach dem Monosandwichverfahren oder dem Verfahren der sequentiellen Einspritzung hergestellt.

## Beschreibung

Die Erfindung betrifft elektrisch leitfähige Kunststofformteile, deren Herstellung und insbesondere deren Verwendung in Kraftstoffsystemen.

Im Zuge verschärfter Emissionsanforderungen an Tanksysteme in Kraftfahrzeugen werden einerseits bisher übliche Umlauf-Kraftstoffsysteme immer häufiger durch rücklauflose Kraftstoffsysteme ersetzt, andererseits wird versucht, durch automatische Einfüllanlagen die Emission von Kohlenwasserstoffen beim Tankvorgang selbst zu verringern oder gar zu vermeiden. Während in Umlauf-Kraftstoffsystemen der Kraftstoff in konstanter Menge in einer Leitung vom Tank zum Motor geführt und überschüssiger, durch die Motorwärme erhitzter Kraftstoff durch eine weitere Leitung zum Tank zurückgeführt wird, wird im rücklauflosen Kraftstoffsystem die Kraftstoffzufuhr durch eine Regelung dem momentanen Verbrauch entsprechend eingestellt. Im Zuge dieser technischen Änderung wird der sonst außerhalb des Tanks liegende Kraftstoffilter in die Kraftstoffördereinheit integriert. Dadurch sollen die Schnittstellen kraftstofführender Bauteile mit der Umgebung und somit die Kohlenwasserstoffemissionen reduziert werden.

Durch Messungen bei Kraftstoffsystemlieferanten konnten im Betrieb dieser neuartigen Kraftstoffördereinheiten elektrostatische Aufladungen an Bauteilen aus Kunststoff festgestellt werden. Elektrostatische Aufladung von kraftstoffdurchströmten Bauteilen bergen jedoch die Gefahr der Funkenbildung und dadurch verursachten Entzündung eines explosionsfähigen Gemisches oder die Gefahr eines durch Funkendurchschlag bedingten Systemausfalls. Ähnliche Probleme wurden auch beim Einsatz automatischer Tankanlagen beobachtet.

In einem ersten Schritt wurden die genannten Probleme dadurch gelöst, daß die entsprechenden Kunststoffbauteile komplett aus elektrisch leitfähigen Kunststoffen gefertigt wurden. Diese können die entstehende Aufladungen weiterleiten und über einen Masseanschluß ableiten. Am Markt bekannt sind beispielsweise Filtergehäuse für Kraftstoff aus elektrisch leitfähigen Polyoxymethylen (POM)-Einstellungen. Polyacetale, zu denen POM zählt, werden auf Grund ihrer hervorragenden mechanischen Eigenschaften und ihrer guten chemischen Beständigkeit seit Jahren im Automobil für viele Anwendungen eingesetzt. Speziell die hohe Beständigkeit gegen Kraftstoffe wird in Kraftstoffördereinheiten genutzt. Da die genannten elektrisch leitfähigen POM-Materialeinstellungen sehr teuer sind, bestand jedoch die Aufgabe, eine kostengünstige Alternative zu finden.

Die Aufgabe wird erfindungsgemäß durch Kunststofformteile gelöst, die einen Korpus aus einem elektrisch nicht leitfähigen Kunststoffmaterial haben, der an seiner Oberfläche ganz oder teilweise mit einem elektrisch leitfähigen Material beschichtet ist.

Die Erfindung betrifft daher Formteile aus einer elektrisch nicht leitenden, kraftstoffbeständigen Kunststoffzusammensetzung deren Oberfläche ganz oder teilweise mit einem elektrisch leitfähigen Material beschichtet ist sowie die Verwendung derartiger Formteile für Anwendungen mit direktem Kontakt zu Kraftstoffen.

Es hat sich überraschend gezeigt, daß bereits eine dünne Schicht aus dem elektrisch leitfähigen Material genügt, um eine Ableitung elektrostatischer Ladungen zu gewährleisten.

Zu den möglichen Anwendungsgebieten für Formteile gemäß der Erfindung zählen insbesondere Kraftstoffbehälter, Kraftstoffleitungen, Verbindungsstücke, Ventilkörper sowie Kraftstoffördereinheiten und Vorratsgeber. Mögliche Bauteile in Kraftstoffördereinheiten und Vorratsgebern sind beispielsweise Flansche, Schwalltöpfe, Pumpenhalter, Kraftstoffpumpen, Pumpendeckel, Filtersiebe etc. Bevorzugte Ausführungsformen des Erfindungsgegenstands sind Kraftstoffilter und Einsätze für Tankeinfüllstutzen.

Das besondere Kennzeichen des Erfindungsgegenstandes besteht darin, daß der Korpus des Kunststofformteils an seiner Oberfläche mit einem elektrisch leitfähigen Material versehen ist. Die Oberfläche muß jedoch nicht vollständig beschichtet sein. Eine ausreichende Ableitung elektrostatischer Ladungen wird auch erreicht, wenn die Oberfläche nur teilweise mit dem elektrisch leitfähigen Material beschichtet ist. Mögliche Ausgestaltungen einer Teilbeschichtung sind flächige Beschichtungen mit Aussparungen, streifenförmige Beschichtungen und flächig verteilte punktuelle Beschichtungen. Vorteilhaft ist dabei, wenn die elektrisch leitfähigen Schichten untereinander verbunden sind und somit einen Abtransport elektrischer Ladungen über einen Massekontakt ermöglichen. Bei flächig verteilten punktuellen Beschichtungen ist der Ladungstransport durch spezielle Kontaktierungen zu gewährleisten.

Vorteilhaft ist u.a. auch, wenn das elektrisch leitende Material an Engstellen, Kanten, Stegen, Ecken etc. des Formteils angebracht wird und einen Ladungsabtransport von derartigen Positionen ermöglicht.

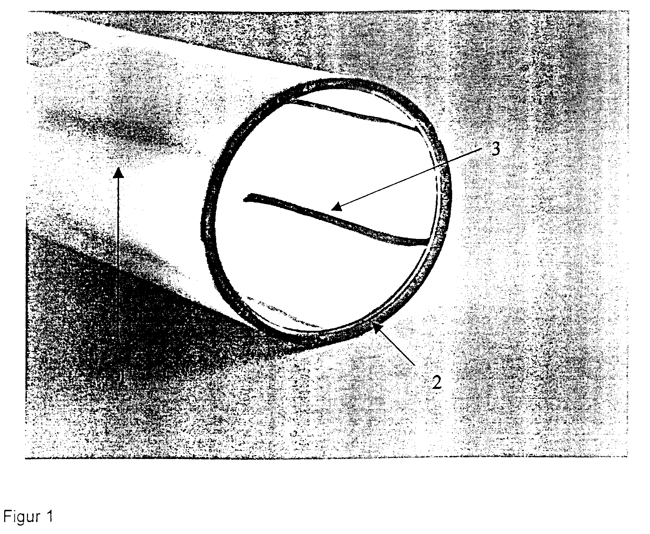

Eine bevorzugte Ausgestaltung des erfindungsgemäßen Formteils ist in Figur 1 gegeben, die beispielhaft einen zylinderförmigen Kraftstoffilter 1 aus einem elektrisch nicht leitenden Kunststoff zeigt, der auf seiner Stirnseite eine ringförmige Beschichtung 2 aus einem elektrisch leitfähigen Material trägt, die mit auf der Filterinnenseite befindlichen streifenförmigen Beschichtungen 3 aus elektrisch leitfähigem Material in Verbindung steht. Die streifenförmige Beschichtung 3 könnte wahlweise auch auf der äußeren Oberfläche vorhanden sein oder sich zu gitter- oder netzartigen Strukturen ausweiten. Eine vollständige Beschichtung der Innen- bzw. Außenseite des Filters ist prinzipiell auch möglich, jedoch meist nicht erforderlich und aus Kostengründen nicht zu empfehlen. Ähnliche Ausgestaltungen sind insbesondere auch für Einsätze von Tankeinfüllstutzen möglich.

Bei dem elektrisch leitfähigen Material kann es sich beispielsweise um ein metallisches Substrat handeln, das beispielsweise durch Umspritzen in den Kunststoff eingearbeitet, auf den Kunststoff aufgesteckt und gegebenfalls durch Erwärmung besser mit diesem verbunden, auf den Kunststoff aufgedampft oder per Laser auf diesen aufgetragen wird. Es kann sich aber auch um einen elektrisch leitfähigen Kunststoff, dauerhaft haftend aufgetragenen Leitfähigkeitsruß, Carbonfasern oder sonstiges elektrisch leitfähiges Material handeln.

Vorzugsweise wird elektrisch leitfähiger Kunststoff aufgetragen. Dieser muß ebenfalls eine hohe Beständigkeit gegen Kraftstoffe und, insbesondere wenn ein bewegliches Bauteil oder ein Kontakt zu einem beweglichen Bauteil vorgesehen ist, eine hohe Abriebfestigkeit aufweisen. Als gut geeignet hat sich hierbei ebenfalls Polyacetal bewährt, dessen elektrische Leitfähigkeit insbesondere durch einen entsprechenden Zusatz von Kohlenstoffasern, Metallfasern (insbesondere Stahlfasern) und/oder Leitfähigkeitsruß bewirkt werden kann. Wahlweise kann der elektrisch leitfähige Kunststoff auch Stabilisatoren, Füll-, Verstärkungs- und sonstige Zusatzstoffe enthalten und aus einer Polymermischung bestehen. Bei Verwendung eines Korpus aus Polyacetal stellt das POM C 9021 ELS der Ticona GmbH, Frankfurt, ein besonders geeignetes elektrisch leitfähiges Material dar.

Die Schichtdicke des elektrisch leitfähigen Materials hängt im allgemeinen davon ab, ob das Material in den Korpus eingearbeitet oder auf diesen aufgetragen wird. Wird beispielsweise eine gitterartige Struktur aus dem elektrisch leitfähigen Material mit dem für den Korpus bestimmten Material umspritzt, so sollte die Schichtdicke maximal mit den Dimensionen des Formteils übereinstimmen. Aus Kostengründen ist es jedoch oft bevorzugt, möglichst wenig des elektrisch leitfähigen Materials zu verwenden, so daß die Schichtdicke des elektrisch leitfähigen Materials möglichst gering gehalten wird. Vorteilhaft wird das Material deshalb in oder auf der Oberfläche aufgebracht und weist eine Schichtdicke von 0,1 bis 2 mm, vorzugsweise 0,2 bis 1 mm und besonders bevorzugt von 0,4 bis 0,5 mm auf.

Der Korpus des erfindungsgemäßen Formteils besteht im allgemeinen aus einem kraftstoffbeständigen, in der Regel thermoplastischen Kunststoff. Dieser gibt dem Formteil die erforderliche mechanische Festigkeit und chemische Beständigkeit. Dieser Kunststoff kann wahlweise auch eine Mischung sein und Füll- und/oder Verstärkungsstoffe sowie übliche Additive und Zusatzstoffe enthalten. Besonders geeignet sind Polyacetale, insbesondere Polyoxymethylenhomo- oder -copolymerisate. Insbesondere geeignet sind Polyoxymethylenformmassen, die neben Polyoxymethylen noch Polyalkylenglykol und Zinkoxyd enthalten, wie sie u.a. in der noch nicht veröffentlichten deutschen Patentanmeldung Nr. 19925491.5 beschrieben sind, worauf hiermit Bezug genommen wird. In besonderen Ausführungsformen des erfindungsgemäßen Formteils kann der Korpus auch schichtweise aus verschiedenen Materialien aufgebaut sein. Die bei der jeweiligen Anwendung möglicherweise mit Kraftstoff in Kontakt tretende Oberfläche ist dann jedoch mit einer kraftstoffbeständigen Kunststoffbeschichtung versehen.

Da Form, Dicke und Ausgestaltung des Korpus für die erfindungsgemäße Verwendung des Formteils unbedeutend sind, obliegen diese Parameter im allgemeinen keiner Beschränkung und sind dem jeweiligen Verwendungszweck entsprechend zu wählen. Bei Kraftstoffiltern oder Einsätzen von Tankeinfüllstutzen beträgt die Wanddicke des Korpus vorteilhaft 1 bis 3 mm, bevorzugt 1,5 bis 2 mm.

Die Herstellung des erfindungsgemäßen Formteils kann nach verschiedenen Verfahren erfolgen. Handelt es sich bei dem elektrisch leitfähigen Material um eine formstabile Struktur, so kann diese beispielsweise mit dem für den Korpus gewählten Material umspritzt, an einem zuvor gefertigten Korpus mechanisch verankert oder unter Erwärmung mit der Oberfläche des Korpus verschmolzen werden. Wenn das elektrisch leitfähige Material flexibel, plastisch oder partikulär ist, kann es vorteilhaft durch entsprechende Methoden auf die Oberfläche des Korpus aufgetragen werden. Ein vorteilhaftes Verfahren bei Verwendung elektrisch leitfähiger Kunststoffe ist der Mehrkomponentenspritzguß. Besonders vorteilhaft sind dabei das Sandwichverfahren, insbesondere das Monosandwichverfahren, und das Verfahren der sequentiellen Einspritzung. Die zuletzt genannten Verfahren sind insbesondere zur Herstellung von Kraftstoffiltern und Tankeinfüllstutzeneinsätzen geeignet.

## Patentansprüche

1. Formteil mit einem Korpus aus einer elektrisch nicht leitenden, kraftstoffbeständigen Kunststoffzusammensetzung dessen Oberfläche ganz oder teilweise mit einem elektrisch leitfähigen Material beschichtet ist.

2. Formteil nach Anspruch 1, dadurch gekennzeichnet, daß die Oberfläche des Korpus mit streifenförmiger, linien-, gitter- oder netzartiger Struktur aus dem elektrisch leitfähigen Material beschichtet ist.

3. Formteil nach Anspruch 1 oder 2, dadurch gekennzeichnet, daß der Korpus im wesentlichen aus einer nicht leitenden Kunststoffzusammensetzung, vorzugsweise einer Polyacetalzusammensetzung besteht.

4. Formteil nach einem der Ansprüche 1 bis 3, dadurch gekennzeichnet, daß das elektrisch leitfähige Material aus einer Kunststoffzusammensetzung, vorzugsweise einer Polyacetalzusammensetzung besteht.

5. Formteil nach einem der Ansprüche 1 bis 4, dadurch gekennzeichnet, daß das elektrisch leitfähige Material Kohlenstoffasern, metallische Fasern oder Leitfähigkeitsruß enthält.

6. Verwendung eines Formteils gemäß einem der vorstehenden Ansprüche für Anwendungen mit direktem Kontakt zu Kraftstoff.

7. Kraftstoffilter oder Tankeinfüllstutzeneinsatz mit einem Korpus aus einer elektrisch nicht leitenden, kraftstoffbeständigen Kunststoffzusammensetzung dessen Oberfläche innen und/oder außen und auf mindestens einer seiner Stirnseiten ganz oder teilweise mit einer elektrisch leitfähigen Polyacetalzusammensetzung beschichtet ist.

8. Kraftstoffilter oder Tankeinfüllstutzeneinsatz nach Anspruch 7, dadurch gekennzeichnet, daß die Oberfläche des Korpus mit streifenförmiger, linien-, gitter- oder netzartiger Struktur aus dem elektrisch leitfähigen Material beschichtet ist, wobei unterschiedliche Bereiche dieser Struktur wahlweise untereinander oder mit dem an einer Stirnseite aufgebrachten elektrisch leitfähigen Material elektrisch leitend miteinander verbunden sind.

9. Formteil nach einem der Ansprüche 1 bis 5 oder Kraftstoffilter bzw. Tankeinfüllstutzeneinsatz nach einem der Ansprüche 7 oder 8 hergestellt nach dem Mehrkomponentenspritzgußverfahren, insbesondere dem Monosandwichverfahren oder dem sequentiellen Einspritzverfahren.
